# EUROPEAN PATENT SPECIFICATION

(11) **EP 2 568 170 B1**
(45) Date of publication and mention of the grant of the patent: **07.05.2014**
(21) Application number: 11180805.1
(22) Date of filing: 09.09.2011
(51) Int. Cl.: F03D 11/04, F03D 11/00

(54) **Wind turbine tower with circumferential air guiding tower wall reinforcement**
Windturbinenturm mit Turmwandverstärkung zur Leitung der umlaufenden Luft
Tour d'éolienne dotée d'un renfort de paroi de tour guidant l'air circonférentiel

(43) Date of publication of application: 13.03.2013
(73) Proprietor: Areva Wind GmbH, 27572 Bremerhaven (DE)
(72) Inventor: Tschirch, Alexander, 27568 Bremerhaven (DE)
(74) Representative: Kling, Simone

(56) References cited:
- EP-A1- 2 151 833
- WO-A2-2009/094991
- DE-A1-102008 019 271
- US-A1- 2011 210 233

## Description

During operation, wind turbines convert the kinetic energy of the wind into electric energy. This energy conversion is accompanied by heat losses in the various components of the wind turbine. The generated heat needs to be dissipated in order to prevent damage to the wind turbine.

Document WO 2010/069954 A1 describes a wind turbine with a closed air cooling circuit. Outside air is kept from entering the wind turbine to protect the electric equipment against salt and humidity. The wind turbine is divided by a number of platforms. A pipeline leads air between the upper and lower part of the wind turbine.

Document DE102008019271 A1 discloses a wind turbine tower according to the preamble of claim 1.

Another known solution for heat dissipation is based on a wind turbine tower comprising a tower wall, at least one inlet formed in a section of the tower wall for introducing air surrounding the wind turbine tower into the wind turbine tower, and a tower wall reinforcement.

In this solution, cool outside air surrounding the wind turbine tower is drawn into the tower via the inlets formed in the tower wall. The cool air can then take up the excess heat. For this solution to work, it must in particular meet two conditions.

The first condition is that a large volume of outside air must be drawn into the tower to ensure sufficient cooling. Consequently, large inlets are needed, which jeopardise the static stability of the tower. Typically, stability of the tower is maintained with inlet reinforcements, namely frames lining the walls of the inlets. The framing of the inlets is however not a satisfactory solution because it is complex, expensive and time consuming. In addition, the number of inlets that can be formed into the tower is limited. Indeed, because of the heat input during the welding of the frames a minimum distance between each inlet is required.

The second condition is an effective intake and distribution of the cool outside air inside the tower so that the cool air can absorb the generated heat.

An object of the present invention is therefore to provide a stable wind turbine tower capable of an effective intake and distribution of outside air, while being at the same time easy, cheap and quick to build.

This object is achieved by a wind turbine tower as introduced above, characterised in that the tower wall reinforcement braces the inner circumference of said tower wall section, and in that the tower wall reinforcement defines an air duct for guiding the air along the inner circumference of said tower wall section.

By providing a tower wall reinforcement that braces the inner circumference of the tower wall section having the at least one air introducing inlet, the stability of the wind turbine tower is maintained despite the weakness introduced by the one or more inlets. Hence, there is no need to frame each inlet, which makes the tower easier to build.

Thanks to the air duct defined by the tower wall reinforcement, which air duct guides the air along the inner circumference of the tower wall section, the air is effectively distributed inside the tower.

According to preferred embodiments, the wind turbine tower of the invention has one or several of the following features, taken in isolation or in all technically possible combinations:
- the tower wall reinforcement comprises one or more reinforcement plates inserted into the tower, wherein the edge of the or each reinforcement plate follows the inner circumference of said tower wall section;
- the surface of the or each reinforcement plate is substantially at right angles to the longitudinal axis of the wind turbine tower;
- the tower wall reinforcement comprises an upper reinforcement plate located above the or each inlet and a lower reinforcement plate located below the or each inlet;
- the reinforcement plates are in the number of 2;
- the tower wall reinforcement comprises a preferably cylindrical connecting member connecting the upper reinforcement plate to the lower reinforcement plate;
- the connecting member acts as an air guide;
- the air duct surrounds said air guiding connecting member and is located between the upper and lower reinforcement plate;
- the air guiding connecting member includes an air vent in fluid communication with the air duct, said air vent being an outlet for the air circulating in the air duct;
- several inlets are distributed, and preferably evenly distributed, over the circumference of the tower wall section;
- the tower wall section is part of the upper third of the tower wall;
- the or each inlet is an inlet to said air duct.

The invention also relates to a wind turbine having a wind turbine tower as defined above.

The invention will be better understood when reading the following description of a non limiting example of the invention, with reference to the accompanying figures, wherein
Figure 1 is a longitudinal section through a preferred embodiment of a wind turbine tower according to the invention; and
Figure 2 is a cross section according to arrows II of figure 1.

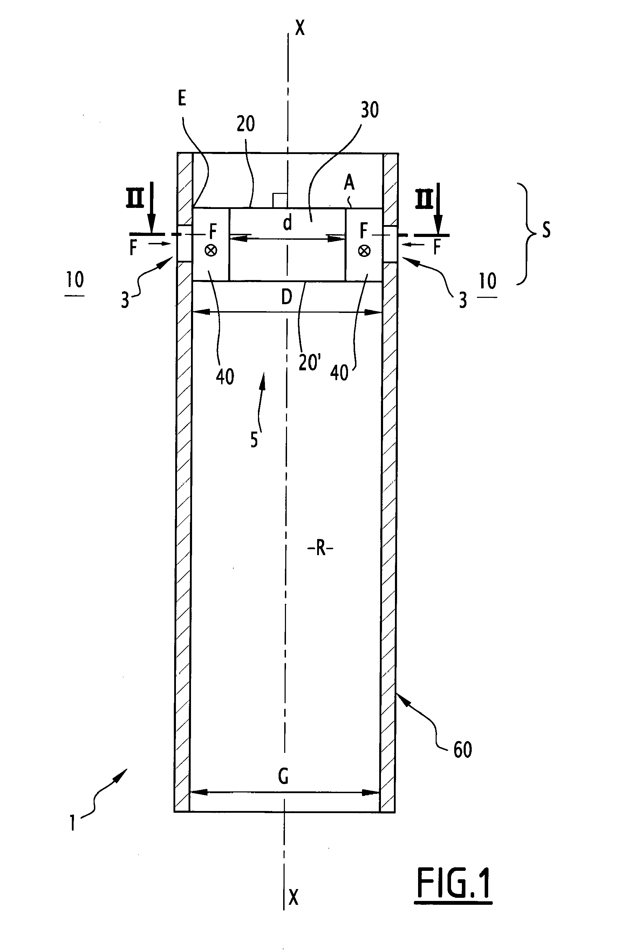

With reference to figure 1, there is shown a longitudinal section of a wind turbine tower 1. The air surrounding the tower 1 has the reference number 10. The longitudinal axis of the tower 1 is indicated by the dashed line X-X. The wind turbine tower 1 includes a tower wall 60 and has an inner diameter G. The tower wall 60 delimits an inside space R of the tower 1. The tower wall 60 has a section S into which several air inlets 3 are formed. Preferably, the section S is part of the upper third of the tower wall 60.

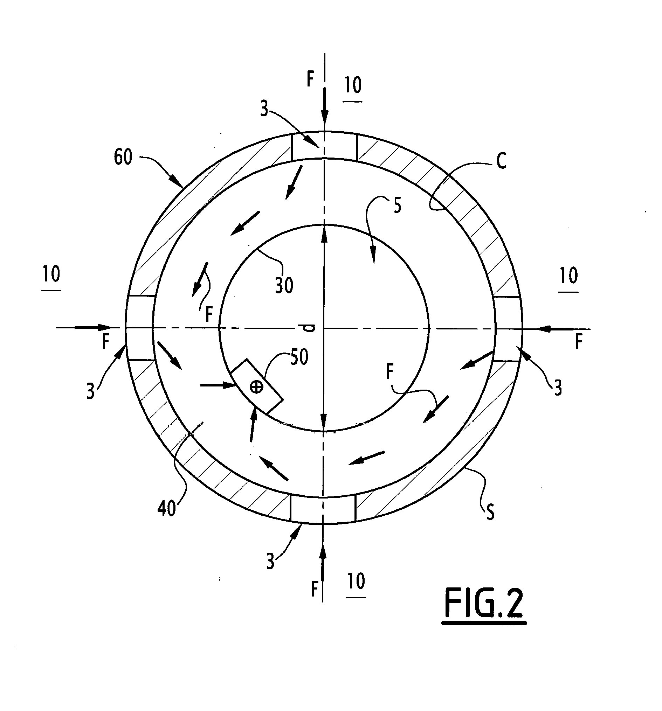

As can be seen in figure 2, the tower wall section S has an inner circumference C. In this exemplary embodiment, there are four oval air inlets 3 that are evenly distributed around the circumference C of the tower wall section S. However, the number, shape and distribution of the air inlets 3 might be different.

A tower wall reinforcement 5 is inserted into the tower wall section S. It braces the inner circumference C of the tower wall section S.

The tower wall reinforcement 5 comprises an upper reinforcement plate 20 located above the air inlets 3, a lower reinforcement plate 20' located below the air inlets 3, a connecting member 30 connecting the two reinforcement plates 20, 20', and an air vent 50 formed in the connecting member 30.

Each reinforcement plate 20, 20' is preferably circular with a diameter D, which corresponds to the inner diameter G of tower 1. Each reinforcement plate 20, 20' has an edge E and a surface A. The edge E of each reinforcement plate 20, 20' follows the inner circumference C of the tower wall section S. The surface A of each reinforcement plate 20, 20' is substantially perpendicular to the longitudinal axis X-X of the tower 1.

The connecting member 30 is preferably cylindrical with a diameter d, which is smaller than the diameter D of the reinforcement plates 20, 20'.

In the present embodiment, the air vent 50 is a cut-out in the cylindrical wall of the connecting member 30.

The reinforcement plates 20, 20', the connecting member 30 and the tower wall section S together define an annular chamber 40. The annular chamber 40 surrounds the connecting member 30 and is located between the upper and lower reinforcement plate 20, 20'. The four air inlets 3 are inlets to the annular chamber 40 and the air vent 50 is an outlet from the annular chamber 40.

The tower wall reinforcement 5 acts as an air guide for introducing the cool outside air 10 into the tower 1 in order to cool the inside space R of the tower. This air guiding effect will now be described in the case where tower 1 is an offshore wind turbine tower. Since the tower wall section S is located in the upper third of the tower 1, it is above the splash water area, meaning that the outside air 10, which is drawn into the tower 1 via the inlets 3, has a comparatively low salt and humidity content. Accordingly, the outside air 10 needs less treatment such as water separation before it can be used for cooling.

With reference to figure 2, the flow path of the air 10 is indicated by the arrows F. Thanks to the circular geometry, there is a uniform air flow from the outside into the inlets 3. The outside air 10 is sucked into the tower wall section S via the inlets 3 and enters the annular chamber 40. The annular chamber 40 acts as an air duct and the connecting member 30 acts as an air guide, such that the air is guided along the inner circumference C of the tower wall section S towards the outlet 50. The air leaves the air duct 40 through the outlet 50 towards the bottom of the tower 1 to be further distributed.

As apparent from the above, the present invention is in particular based on the idea of using the tower wall reinforcement not only for reinforcing the tower but also for guiding the cooling air in a controlled manner.

Thanks to the reinforcement plates 20, 20' that act as stiffening rings, no framing of the inlets 3 is needed.

Since the air vent 50 is formed in the connecting member 30, the air vent 50 can be designed at will without any effect on the stability of the tower 1, and without any need to modify the arrangement of the inlets 3.

Thanks to the direct coupling of the tower wall reinforcement with the tower wall 60 one obtains a hermetic separation between the incoming air and the inside air.

Also, thanks to the dual use of the tower wall reinforcement 5 as a framing and as an air guide, no extra space must be provided for the air duct 40. Indeed, the latter is already included in the tower wall reinforcement 5.

## Claims

1. A wind turbine tower (1) comprising:
- a tower wall (60);
- at least one inlet (3) formed in a section (S) of the tower wall (60) for introducing air (10) surrounding the wind turbine tower into the wind turbine tower; and
- a tower wall reinforcement (5),
**characterised in that** the tower wall reinforcement (5) braces the inner circumference (C) of said tower wall section, and **in that** the tower wall reinforcement defines an air duct (40) for guiding the air (10) along the inner circumference (C) of said tower wall section.

2. The wind turbine tower of claim 1, wherein the tower wall reinforcement (5) comprises one or more reinforcement plates (20, 20') inserted into the tower (1), wherein the edge (E) of the or each reinforcement plate follows the inner circumference (C) of said tower wall section (S).

3. The wind turbine tower of claim 2, wherein the surface (A) of the or each reinforcement plate (20, 20') is substantially at right angles to the longitudinal axis (X-X) of the wind turbine tower (1).

4. The wind turbine tower of any one of the previous claims, wherein the tower wall reinforcement (5) comprises an upper reinforcement plate (20) located above the or each inlet and a lower reinforcement plate (20') located below the or each inlet.

5. The wind turbine tower of claim 4, wherein the reinforcement plates are in the number of 2.

6. The wind turbine tower of claim 4 or 5, wherein the tower wall reinforcement further comprises a preferably cylindrical connecting member (30) connecting the upper reinforcement plate to the lower reinforcement plate.

7. The wind turbine tower of claim 6, wherein the connecting member (30) acts as an air guide.

8. The wind turbine tower of claim 7, wherein said air duct (40) surrounds said air guiding connecting member (30) and is located between the upper and lower reinforcement plate.

9. The wind turbine tower of claim 7 or 8, wherein the air guiding connecting member (30) includes an air vent (50) in fluid communication with the air duct (40), said air vent being an outlet for the air circulating in the air duct.

10. The wind turbine tower of any one of the previous claims, with several inlets (3) distributed, and preferably evenly distributed, over the circumference (C) of the tower wall section.

11. The wind turbine tower of any one of the previous claims, wherein said tower wall section is part of the upper third of the tower wall.

12. The wind turbine tower of any one of the previous claims, wherein the or each inlet is an inlet to said air duct (40).

13. A wind turbine having a wind turbine tower (1) according to any one of the previous claims.

## Patentansprüche

1. Windturbinenturm (1), umfassend:
- eine Turmwand (60),
- mindestens einen Einlass (3), der in einem Abschnitt (S) der Turmwand (60) gebildet ist, um Luft (10), die den Windturbinenturm umgibt, in den Windturbinenturm einzuführen; und
- eine Turmwandverstärkung (5),
**dadurch gekennzeichnet, dass** die Turmwandverstärkung (5) den inneren Umfang (C) des Turmwandabschnitts verstrebt, und dass die Turmwandverstärkung einen Luftkanal (40) definiert, um die Luft (10) entlang dem inneren Umfang (C) des Turmwandabschnitts zu führen.

2. Windturbinenturm nach Anspruch 1, wobei die Turmwandverstärkung (5) eine oder mehrere Verstärkungsplatten (20, 20') umfasst, die in den Turm (1) eingeführt sind, wobei die Kante (E) der oder jeder Verstärkungsplatte dem inneren Umfang (C) des Turmwandabschnitts (S) folgt.

3. Windturbinenturm nach Anspruch 2, wobei sich die Fläche (A) der oder jeder Verstärkungsplatte (20, 20') im Wesentlichen in rechten Winkeln zur Längsachse (X - X) des Windturbinenturms (1) befindet.

4. Windturbinenturm nach einem der vorhergehenden Ansprüche 1, wobei die Turmwandverstärkung (5) eine obere Verstärkungsplatte (20) umfasst, die sich über dem oder jedem Einlass befindet, und eine untere Verstärkungsplatte (20'), die sich unter dem oder jedem Einlass befindet.

5. Windturbinenturm nach Anspruch 4, wobei die Verstärkungsplatten in 2-facher Ausführung vorhanden sind.

6. Windturbinenturm nach Anspruch 4 oder 5, wobei die Turmwandverstärkung weiter ein vorzugsweise zylindrisches verbindendes Element (30) aufweist, das die obere Verstärkungsplatte mit der unteren Verstärkungsplatte verbindet.

7. Windturbinenturm nach Anspruch 6, wobei das verbindende Element (30) als eine Luftführung dient.

8. Windturbinenturm nach Anspruch 7, wobei der Luftkanal (40) das luftführende verbindende Element (30) umgibt und sich zwischen der oberen und der unteren Verstärkungsplatte befindet.

9. Windturbinenturm nach Anspruch 7 oder 8, wobei das luftführende verbindende Element (30) eine Luftabzugsöffnung (50) umfasst, die in fluidischer Kommunikation mit dem Luftkanal (40) steht, wobei die Luftabzugsöffnung ein Auslass für die Luft ist, die im Luftkanal zirkuliert.

10. Windturbinenturm nach einem der vorhergehenden Ansprüche in dem mehrere Einlässe (3) über den Umfang (C) des Turmwandabschnitts verteilt und vorzugsweise gleichmäßig verteilt sind.

11. Windturbinenturm nach einem der vorhergehenden Ansprüche, wobei der Turmwandabschnitt Teil des oberen Drittels der Turmwand ist.

12. Windturbinenturm nach einem der vorhergehenden Ansprüche, wobei der oder jeder Einlass ein Einlass in den Luftkanal (40) ist.

13. Windturbine mit einem Windturbinenturm (1) nach einem der vorhergehenden Ansprüche.

## Revendications

1. Tour d'éolienne (1) comprenant:
une paroi de tour (60);
au moins une entrée (3) formée dans une section (S) de la paroi de tour (60) pour faire entrer l'air (10) entourant la tour d'éolienne, dans la tour d'éolienne; et
un renforcement (5) de paroi de tour,
**caractérisée en ce que** le renfort (5) de paroi de tour renforce la circonférence interne (C) de ladite section de paroi de tour, et **en ce que** le renforcement de paroi de tour définit un conduit d'air (40) pour guider l'air (10) le long de la circonférence interne (C) de ladite section de paroi de tour.

2. Tour d'éolienne selon la revendication 1, dans laquelle le renforcement (5) de paroi de tour comprend une ou plusieurs plaques de renforcement (20, 20') insérées dans la tour (1), dans laquelle le bord (E) de la ou de chaque plaque de renforcement suit la circonférence interne (C) de ladite section de paroi (S) de tour.

3. Tour d'éolienne selon la revendication 2, dans laquelle la surface (A) de la ou de chaque plaque de renforcement (20, 20') est sensiblement en angle droit par rapport à l'axe longitudinal (X-X) de la tour d'éolienne (1).

4. Tour d'éolienne selon l'une quelconque des revendications précédentes, dans laquelle le renforcement (5) de paroi de tour comprend une plaque de renforcement supérieure (20) située au-dessus de la ou de chaque entrée et une plaque de renforcement inférieure (20') située au-dessous de la ou de chaque entrée.

5. Tour d'éolienne selon la revendication 4, dans laquelle les plaques de renforcement sont au nombre de 2.

6. Tour d'éolienne selon la revendication 4 ou 5, dans laquelle le renforcement de paroi de tour comprend en outre un élément de raccordement (30) de préférence cylindrique raccordant la plaque de renforcement supérieure à la plaque de renforcement inférieure.

7. Tour d'éolienne selon la revendication 6, dans laquelle l'élément de raccordement (30) sert de guide d'air.

8. Tour d'éolienne selon la revendication 7, dans laquelle ledit conduit d'air (40) entoure ledit élément de raccordement de guidage d'air (30) et est situé entre les plaques de renforcement supérieure et inférieure.

9. Tour d'éolienne selon la revendication 7 ou 8, dans laquelle l'élément de raccordement de guidage d'air (30) comprend un évent (50) en communication de fluide avec le conduit d'air (40), ledit évent étant une sortie pour l'air circulant dans le conduit d'air.

10. Tour d'éolienne selon l'une quelconque des revendications précédentes, avec plusieurs entrées (3) réparties, et de préférence réparties régulièrement, sur la circonférence (C) de la section de paroi de tour.

11. Tour d'éolienne selon l'une quelconque des revendications précédentes, dans laquelle ladite section de paroi de tour fait partie du tiers supérieur de la paroi de tour.

12. Tour d'éolienne selon l'une quelconque des revendications précédentes, dans laquelle la ou chaque entrée est une entrée dans ledit conduit d'air (40).

13. Eolienne ayant une tour d'éolienne (1) selon l'une quelconque des revendications précédentes.
